# EUROPÄISCHE PATENTSCHRIFT

(11) **EP 0 992 334 B1**
(45) Veröffentlichungstag und Bekanntmachung des Hinweises auf die Patenterteilung: **08.01.2003**
(21) Anmeldenummer: 99119487.9
(22) Anmeldetag: 30.09.1999
(51) Int. Cl.: B29C 47/00

(54) **Abzugsvorrichtung für Schlauchbahnen aus Kunststoffolie**
Haul-off apparatus for plastic tubular films
Dispositif de tirage de films tubulaires en matière plastique

(30) Priorität: 06.10.1998 DE 29817800 U
(43) Veröffentlichungstag der Anmeldung: 12.04.2000
(73) Patentinhaber: Klaus Reinhold Maschinen- und Gerätebau GmbH, 49525 Lengerich (DE)
(72) Erfinder: Fähling, Gerd, 53773 Hennef (DE); Kasselmann, Gerd, 49170 Hagen a.T.W. (DE); Zimmermann, Richard, 53127 Bonn (DE)
(74) Vertreter: Busse & Busse Patentanwälte

(56) Entgegenhaltungen:
- EP-A- 0 658 506
- EP-A- 0 711 648
- US-A- 3 491 655

## Beschreibung

Die Erfindung betrifft eine Abzugsvorrichtung für von einem Extruder im Blasverfahren hergestellte Schlauchbahnen aus Kunststoffolie nach dem Oberbegriff des Anspruchs 1.

Bei Abzugsvorrichtungen dieser Art, die für eine Verteilung von in der Schlauchbahn eingefrorenen Dickentoleranzen über die gesamte Wickelbreite des herzustellenden Folienwickels reversierend ausgebildet sein können, ist sowohl die Umlenkwalze als auch die Luftwendestange üblicherweise zylindrisch ausgebildet. Im Betrieb der Abzugsvorrichtung tritt durch die Luftaustrittsöffnungen der Luftwendestange Druckluft aus, die die herantransportierte flachgelegte Schlauchbahn bei ihrer Umschlingung der Luftwendestange auf einem Luftpolster schweben läßt, um eine reibungsfreie Herumführung der Schlauchbahn um die drehfeste Wendestange zu erreichen. Sofern der Druckluftaustritt und damit das Luftpolster zu schwach eingestellt ist, gelangt die Schlauchbahn bei ihrer Umschlingung der Luftwendestange mit dieser in Kontakt, wodurch Kratzer und dgl. Beschädigungen auf der Schlauchbahn entstehen. Bei Schlauchbahnen mit stark haftenden Oberflächen kann es dabei sogar zu einem bereichsweisen Festkleben der Schlauchbahnoberfläche kommen, was eine Unterbrechung des Produktionsvorgangs zur Folge hat.

Aus diesem Grunde gibt es Bestrebungen, an der Wendestange oder den Wendestangen mit einem möglichst starken Luftpolster zu arbeiten, so daß Kratzer an der Folienoberfläche und Produktionsunterbrechungen durch ein Anhaften der Schlauchbahn an einer Luftwendestange vermieden werden. Dabei hat sich jedoch gezeigt, daß sich die flachgelegte Schlauchbahn bei einem starken Luftpolster auf der Rückseite der Luftwendestange, d.h. in Folienlaufrichtung hinter dem von der Schlauchbahn umschlungenen Luftdüsenbereich nach dem Verlassen des Zenits der Luftwendestange, stark aufbläht, mit der Folge, daß sich die seitlichen Faltkanten der flachgelegten Schlauchbahn einander ein wenig annähern. Läuft danach die Schlauchbahn mit ihren einander angenäherten seitlichen Faltkanten und dadurch entsprechend verschmälert auf eine nachfolgende zylindrische Umlenkwalze auf, so entsteht bei der flachen Kontaktumschlingung der Umlenkwalze eine Fältelung der Schlauchbahn in deren mittlerem Bereich, wodurch wiederum die hergestellte Schlauchbahn in ihrer Qualität negativ beeinflußt wird. Außerdem entstehen durch eine starke Aufblähung der Schlauchbahn auf der Rückseite der Luftwendestange starke Leckverluste der Druckluft, die nur schwierig auszugleichen sind, da ein vermehrter Druckluftausstoß im Umschlingungsbereich der Luftwendestange zu einem unruhigen Lauf der Schlauchbahn mit negativen Auswirkungen auf den Produktionsvorgang führen kann.

Aus der EP-A-0 711 648 sind ferner Abzugsvorrichtungen bekannt geworden, bei denen die Umlenkwalze und/oder die Luftwendestange über ihre Länge einen unterschiedlichen Durchmesser zur Herbeiführung einer konkaven oder konvexen Mantel- oder Umfangsfläche der Umlenkwalze und/oder der Luftwendestange aufweist. Durch diese Umfangsflächenform wird zwar einer Anhaftung der Schlauchbahn im Umschlingungsbereich durch das aufgebrachte Luftpolster entgegengewirkt, jedoch wird der Schlauchbahn auf der Rückseite einer entsprechend ausgebildeten Luftwendestange ein konvex oder konkav bogenförmiges Querschnittsprofil aufgeprägt, was wiederum zu einer Annäherung der Seitenfaltkanten der flachgelegten Schlauchbahn mit der Gefahr der Bildung einer Fältelung im Mittelbereich der Folie bei ihrem Weitertransport führt. Außerdem entsteht auf der Rückseite der Luftwendestange eine erhebliche Leckströmung der Druckluft im mittleren oder in den seitlichen Bereichen der Luftwendestange, je nachdem, ob diese mit einer konkaven oder konvexen Umfangsfläche ausgestattet ist.

Der Erfindung liegt die Aufgabe zugrunde, eine Abzugsvorrichtung der gattungsgemäßen Art zu schaffen, bei der unter Erhalt eines ausreichend starken Luftpolsters zur Vermeidung einer Anhaftung der flachgelegten Schlauchbahn an der Luftwendestange in deren Umschlingungsbereich hohe Druckluftverluste durch eine Leckströmung hinter der Luftwendestange und die Entstehung einer unerwünschten Faltenbildung im mittleren Bereich der Schlauchbahn bei deren Weitertransport vermieden sind.

Diese Aufgabe wird nach der Erfindung durch eine Ausgestaltung der Vorrichtung gemäß dem Anspruch 1 gelöst. Dadurch, daß bei dieser Ausgestaltung die Luftaustrittsöffnungen der Luftwendestange auf ihrer konkaven Seite, d.h. der der Sehne eines gedachten zugehörigen Kreisabschnitts zugewandten Seite, angeordnet sind, ist der erforderliche Raum zur Aufbringung eines ausreichend großen Luftpolsters geschaffen, das eine Anhaftung der flachgelegten Schlauchbahn bei ihrer Umschlingung der Luftwendestange, auch bei einer klebrigen Oberflächenbeschaffenheit, vermeidet. Zugleich gewährleistet der durchgehend konstante Außendurchmesser der Luftwendestange, daß die Schlauchbahn am Zenit der Luftwendestange von dieser geradebenig über die konvexe Seite der Luftwendestange abläuft, so daß einem Aufblähen der Schlauchbahn auf der Rückseite der Luftwendestange durch mitgeschleppte Druckluft aus dem Umschlingungsbereich in Verbindung mit einer Einwärtsverformung der Wendestangenumfangsfläche entgegengewirkt wird. Damit ist auch die Ursache für eine unerwünschte Faltenbildung im mittleren Bereich der Schlauchbahn bei ihrem Weitertransport ausgeschaltet, so daß die Voraussetzungen für eine störungsfreie Produktion von Blasfolien, auch solchen mit stark haftenden Oberflächen, geschaffen sind.

Im allgemeinen ist die Krümmungsebene der Luftwendestange parallel zu einer von einer stromaufwärts angeordneten Umlenkwalze vorgegebenen Förderebene der flachgelegten Schlauchbahn angeordnet. Dies bedeutet bei einer in der Regel zum Einsatz kommenden Abzugsvorrichtung, die die senkrecht vom Extruder hochgeförderte Schlauchbahn aufnimmt, eine horizontale Anordnung der Umlenkwalze oder -walzen und demgemäß eine horizontale Anordnung der Luftwendestange oder -stangen für den Transport der flachgelegten Schlauchbahn durch die Abzugsvorrichtung über ihrerseits horizontale Förderwegabschnitte.

Eine einstellbare Abstützung der Luftwendestange oder -stangen ist dabei vorteilhaft, derart, daß ihre Krümmungsebene aus einer zur Förderebene der flachgelegten Schlauchbahn parallelen bzw. üblicherweise horizontalen Grundstellung in eine Schrägstellung zu dieser mit einem Winkel von etwa 10 bis 20° einstellbar ist. Hierdurch kann das Luftpolster reguliert und der Verlauf der Schlauchbahn optimiert werden.

Die Bogenhöhe des von der Luftwendestange dargebotenen Bogens, d.h. das Abstandsmaß zwischen dem Scheitelpunkt des Bogens und der Sehne eines gedachten zugehörigen Kreisabschnitts, richtet sich nach der Länge der Luftwendestange, die sich wiederum nach der maximalen Breite der hergestellten Schlauchbahnen richtet. Die Bogenhöhe beträgt dabei nur einige wenige Millimeter und liegt etwa im Bereich von 1 bis 10 mm.

Zur Vermeidung von Druckluftverlusten und störenden Einflüssen auf das Förderverhalten der Schlauchbahn im Umschlingungsbereich der Luftleitwalze können bei einem Transport schmaler Schlauchbahnen, die die Länge der für eine maximale Schlauchbreite ausgelegten Wendestangen unterschreiten, die nicht benötigten Luftaustrittsöffnungen im Umschlingungsbereich der Luftwendestange außerhalb des Förderbereichs, z.B. durch eine im Inneren der Luftwendestange angebrachte Abblendvorrichtung, verschließbar sein.

Weitere Einzelheiten und vorteilhafte Wirkungen der Erfindung ergeben sich aus der nachstehenden Beschreibung des Gegenstands der Erfindung in Verbindung mit der Zeichnung, in der ein Ausführungsbeispiel einer erfindungsgemäßen Abzugsvorrichtung schematisch veranschaulicht ist. Es zeigt:
- Fig. 1: eine Seitenansicht einer reversierenden Abzugsvorrichtung für von einem Blasfolienextruder hergestellte Schlauchbahnen aus Kunststoffolie,
- Fig. 2: eine Seitenansicht einer erfindungsgemäßen Luftwendestange in gegenüber Fig. 1 vergrößertem Maßstab,
- Fig. 3: eine Stirnansicht der Luftwendestange gemäß Fig. 2 und
- Fig. 4: eine Draufsicht auf die Luftwendestange gemäß den Fig. 2 und 3.

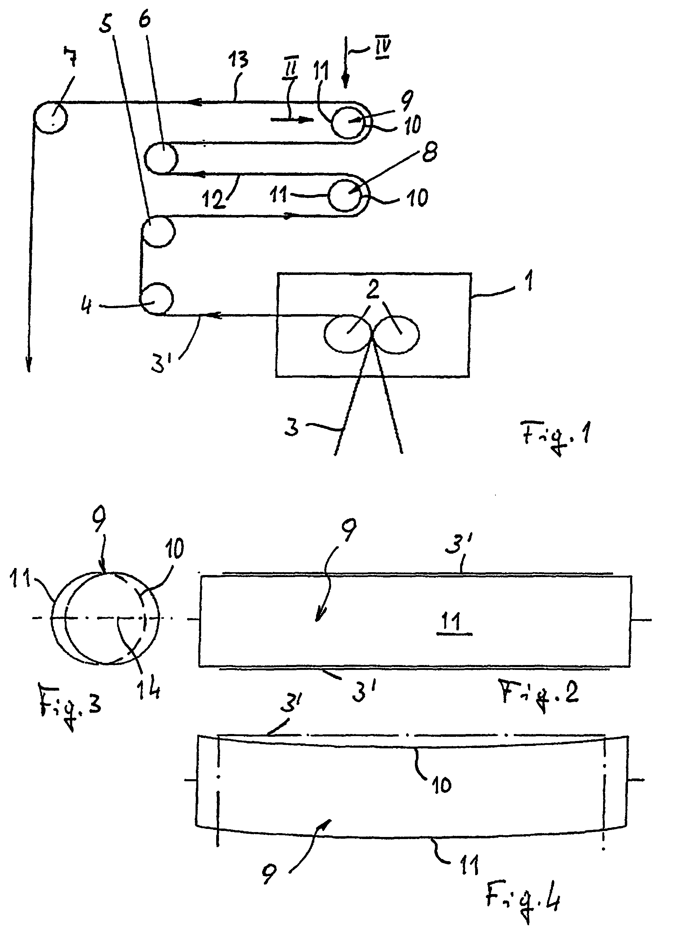

In Fig. 1 ist eine reversierende Abzugsvorrichtung für von einem Extruder im Blasverfahren hergestellte Schlauchbahnen aus Kunststoffolie rein schematisch nur mit ihren zum Verständnis der Erfindung erforderlichen Teilen dargestellt. Die Abzugsvorrichtung umfaßt eine Flachlegeeinrichtung 1 mit einem Paar von Abquetschwalzen 2 für die mit aufgeweitetem Rundquerschnitt vom Blaskopf eines Extruders (nicht dargestellt) zugeführte Schlauchbahn 3, die zwischen den Abquetschwalzen 2 flachgelegt und sodann als Flachbahn 3' durch ein reversierendes System von drehbar gelagerten Umlenkwalzen 4, 5, 6 und 7 und drehfest abgestützten Luftwendestangen 8 und 9 zur Verteilung der Dickentoleranzen hindurch und sodann einer Wickeleinrichtung in Pfeilrichtung zugeführt wird.

Die Umlenkwalzen 5 bis 7 sind von geraden Zylindern gebildet, d.h. daß sie einen durchgehend konstanten Außendurchmesser aufweisen. Die Luftwendestangen 8 und 9 weisen ihrerseits einen durchgehend konstanten Außendurchmesser über ihre gesamte Länge auf, sie besitzen jedoch in Achsrichtung einen bogenförmigen, eine Krümmungsebene 14 definierenden Verlauf. Dadurch weist jede Luftwendestange 8, 9, wie in den Fig. 2 bis 4 für die Luftwendestange 9 übertrieben dargestellt, eine konkave Seite 10 und eine konvexe Seite 11 auf. Die Anordnung von Luftaustrittsöffnungen der Luftwendestangen 8, 9 befindet sich dabei auf der konkaven Seite 10 der Luftwendestange 8, 9 in einem Bereich ihrer Umfangsfläche von etwa 180°, der von der flachgelegten Schlauchbahn 3' bei ihrem Transport durch die Abzugsvorrichtung umschlungen wird.

Aus Fig. 4, die einer Draufsicht in Richtung des Pfeils IV der Fig. 1 entspricht, ist ersichtlich, daß sich auf der konkaven Seite 10 der Luftwendestange 9 ein ausreichend starkes Luftpolster ausbilden läßt, das ein Anhaften der die Luftwendestange in diesem Bereich umschlingenden Schlauchbahn 3' verhindert. Aus Fig. 2, die einer Seitenansicht der Luftwendestange 9 in Richtung des Pfeils II der Fig. 1 entspricht, ist ersichtlich, daß die Schlauchbahn 3' im Bereich des Zenits der Luftwendestange 9 genau gerade und horizontal von dieser abläuft. Das gleiche gilt für die Luftwendestange 8.

Die Umlenkwalzen 4 bis 7 und die Luftwendestangen 8,9 haben in der Abzugsvorrichtung sämtlich eine horizontale Ausrichtung. Entsprechend liegt die Krümmungsebene der Luftwendestangen 8,9 in einer horizontalen Ebene. Der gerade Ablauf der Schlauchbahn 3' von den Luftwendestangen 8 und 9 vermeidet ein Aufblähen der hinter den Luftwendestangen 8 und 9 jeweils auf einem horizontalen Abschnitt 12 bzw. 13 in Pfeilrichtung weitergeförderten Schlauchbahn 3' und damit auch eine Faltenbildung in deren mittlerem Bereich bei der flachen Umschlingung der jeweils anschließenden zylindrischen Umlenkwalze 6 bzw. 7.

## Patentansprüche

1. Abzugsvorrichtung für von einem Extruder im Blasverfahren hergestellte Schlauchbahnen aus Kunststoffolie, mit einer Flachlegevorrichtung für die mit aufgeweitetem Rundquerschnitt zugeführte Schlauchbahn und mit zumindest einer drehbar gelagerten Umlenkwalze sowie zumindest einer drehfest abgestützten Luftwendestange zum Weitertransport der flachgelegten Schlauchbahn, wobei die Luftwendestange in einem von der flachgelegten Schlauchbahn bei ihrem Transport umschlungenen Bereich ihrer Umfangsfläche mit einer Anordnung von Luftaustrittsöffnungen versehen ist, **dadurch gekennzeichnet, daß** die Luftwendestange (8,9) bei konstantem Außendurchmesser einen in Achsrichtung bogenförmigen, eine Krümmungsebene (14) definierenden Verlauf mit einer konkaven und einer konvexen Seite (10,11) der Luftwendestange (8,9) aufweist und die Luftaustrittsöffnungen auf der konkaven Seite (10) der Luftwendestange (8,9) angeordnet sind.

2. Vorrichtung nach Anspruch 1, **dadurch gekennzeichnet, daß** die Krümmungsebene (14) der Luftwendestange (8,9) parallel zu einer von einer stromaufwärts angeordneten Umlenkwalze (5,6) vorgegebenen Förderebene der flachgelegten Schlauchbahn (3') angeordnet ist.

3. Vorrichtung nach Anspruch 1 oder 2, **dadurch gekennzeichnet, daß** die Luftwendestange (8,9) einstellbar abgestützt ist, derart, daß ihre Krümmungsebene (14) aus einer zur Förderebene der flachgelegten Schlauchbahn (3') parallelen Grundstellung in eine Schrägstellung zu dieser einstellbar ist.

4. Vorrichtung nach einem der Ansprüche 1 bis 3, **dadurch gekennzeichnet, daß** die Bogenhöhe des von der Luftwendestange (8,9) dargebotenen Bogens etwa 1 bis 10mm beträgt.

5. Vorrichtung nach einem der Ansprüche 1 bis 4, **dadurch gekennzeichnet, daß** für einen Transport schmaler Schlauchbahnen (3') die nicht benötigten Luftaustrittsöffnungen der Luftwendestange (8,9) verschließbar sind.

## Claims

1. Draw-off device for tubular webs of synthetic material produced by a blow-type extruder with a flat-laying device for the in-fed tubular web with fully-extended round cross-section and having at least one freely-rotating deflection roller and at least one air turning bar mounted in a non-rotating manner for continued transport of the flattened tubular web, whereby the air turning bar in one of the regions enveloped by the flattened web during its passage is provided with an arrangement of air-discharge openings in its circumferential surface **characterised in that** the air turning bar (8, 9) which possesses a constant external diameter exhibits an arc-shaped curved plane (14) with respect to its axis direction and the air turning bar has a concave and a convex side (10, 11) with the air-discharge openings arranged in the concave side (10) of the air turning bar (8, 9).

2. Device in accordance with claim 1 **characterised in that** the curved plane (14) of the air turning bar (8,9) is arranged to be parallel to a delivery plane for the flattened tubular web (3') pre-set by a deflection roller (5, 6) arranged up-stream.

3. Device in accordance with claim 1 or claim 2 **characterised in that** the air turning bar (8, 9) is mounted in an adjustable manner such that its curved plane (14) is capable of being adjusted from a basic position parallel to the delivery plane of the flattened tubular web (3') to a position which is inclined to the latter.

4. Device in accordance with one of the claims 1 to 3, **characterised in that** the height of the arc presented by the air turning bar (8, 9) amounts to between 1 and 10 mm.

5. Device in accordance with one of the claims 1 to 4, **characterised in that** when the transport of narrow tubular webs (3') is involved the unrequired air-discharge openings in the air turning bar (8, 9) may be closed off.

## Revendications

1. Dispositif d'extraction d'une gaine formée d'un film de matière plastique, fabriquée par soufflage dans une extrudeuse, comportant un dispositif de mise à plat de la gaine tubulaire fournie avec une section circulaire agrandie, et au moins un tambour de renvoi monté à rotation et au moins des tiges de retournement à air appuyées solidaires en rotation pour la poursuite du transport de la gaine tubulaire mise à plat, la surface périphérique, des tiges de retournement à air étant munie dans une zone entourée par la gaine tubulaire mise à plat lors de son transport, d'une répartition d'orifices de sortie d'air
**caractérisé en ce que**
pour un diamètre extérieur constant, la tige de retournement à air (8, 9) présente un tracé cintré dans la direction axiale, définissant un plan de cintrage (14) avec un côté concave et un côté convexe (10, 11) pour la tige (8, 9), les orifices de sortie d'air étant prévus sur le côté concave (10) de la tige de retournement à air (8, 9).

2. Dispositif selon la revendication 1,
**caractérisé en ce que**
le plan de cintrage (14) de la tige de retournement à air (8, 9) est parallèle à un plan de transfert prédéterminé de la gaine tubulaire mise à plat (3'), en amont du tambour de renvoi (5, 6).

3. Dispositif selon l'une quelconque des revendications 1 ou 2,
**caractérisé en ce que**
la tige de retournement à air (8, 9) est appuyée de manière réglable pour que son plan de cintrage (14) puisse être réglé de sa position de base parallèle au plan de transfert de la gaine tubulaire mise à plat (3'), dans une position inclinée par rapport à cette position de base.

4. Dispositif selon l'une quelconque des revendications 1 à 3,
**caractérisé en ce que**
la flèche de l'arc sous-tendu par la tige de retournement à air (8, 9) est de l'ordre de 1 à 10 mm.

5. Dispositif selon l'une quelconque des revendications 1 à 4,
**caractérisé en ce que**
pour le transport d'une gaine tubulaire (3') étroite sur la tige de retournement à air (8, 9), les orifices de sortie d'air non utilisés peuvent être fermés.
